(19) Europäisches Patentamt
European Patent Office
Office européen des brevets

(11) **EP 4 130 856 B1**

(12) **EUROPEAN PATENT SPECIFICATION**

(45) Date of publication and mention
of the grant of the patent:
**15.07.2026 Bulletin 2026/29**

(21) Application number: **21775072.8**

(22) Date of filing: **12.01.2021**

(51) International Patent Classification (IPC):
**G02C 13/00** (2006.01)    **G01M 11/02** (2006.01)
**G02C 7/02** (2006.01)

(52) Cooperative Patent Classification (CPC):
**G01M 11/0292; G01M 11/0242; G02C 7/028**

(86) International application number:
**PCT/JP2021/000681**

(87) International publication number:
**WO 2021/192492 (30.09.2021 Gazette 2021/39)**

(54) **LENS EVALUATION METHOD, LENS DESIGN METHOD, SPECTACLE LENS MANUFACTURING METHOD, AND LENS EVALUATION PROGRAM**

GLASBEWERTUNGSVERFAHREN, GLASDESIGNVERFAHREN, BRILLENGLASHERSTELLUNGSVERFAHREN UND GLASBEWERTUNGSPROGRAMM

PROCÉDÉ D'ÉVALUATION DE LENTILLE, PROCÉDÉ DE CONCEPTION DE LENTILLE, PROCÉDÉ DE FABRICATION DE LENTILLE DE LUNETTES, ET PROGRAMME D'ÉVALUATION DE LENTILLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.03.2020 JP 2020051102**

(43) Date of publication of application:
**08.02.2023 Bulletin 2023/06**

(73) Proprietor: **Hoya Lens Thailand Ltd.**
**Pathumthani 12130 (TH)**

(72) Inventor: **MATSUOKA, Shohei**
**Tokyo 160-8347 (JP)**

(74) Representative: **Betten & Resch**
**Patent- und Rechtsanwälte PartGmbB**
**Maximiliansplatz 14**
**80333 München (DE)**

(56) References cited:
WO-A1-2016/002272      JP-A- 2000 186 978
JP-A- 2011 197 556      US-A1- 2011 153 248
US-B2- 7 019 846

• LI XIANG ET AL: "Inspection of misalignment factors in lens assembly", PROCEEDINGS OF SPIE, vol. 7390, 15 June 2009 (2009-06-15), pages 1 - 12, XP093144129, ISSN: 0277-786X, DOI: 10.1117/12.827446
• BINKELE TOBIAS ET AL: "Determination of the paraxial focal length using Zernike polynomials over different apertures", PROCEEDINGS OF SPIE; [PROCEEDINGS OF SPIE ISSN 0277-786X VOLUME 10524], SPIE, US, vol. 10110, 20 February 2017 (2017-02-20), pages 1011008 - 1011008, XP060083367, ISBN: 978-1-5106-1533-5, DOI: 10.1117/12.2251442

## Description

Technical Field

The present invention relates to a lens evaluation method, a lens designing method, a spectacle lens production method, and a lens evaluation program.

Background Art

In order to provide a spectacle lens that favorably matches the spectacle wearer's demands, a technique has been proposed in which, when designing or producing a spectacle lens, a wavefront shape relating to the spectacle lens is specified and an individual eye model of the spectacle wearer is also defined, and the surface shape of the spectacle lens is optimized based on the wavefront shape and the individual eye model (for example, see Patent Document 1).

Citation List

Patent Documents

Patent Document 1: Japanese Patent No. 6209722
As further prior art, reference is made to US 2011/153248 A1; US 7 019 846 B2; O 2016/002272 A1; Xiang Li et al., "Inspection of misalignment factors in lens assembly", doi: 10.1117/12.827446; Binkele et al., "Determination of the paraxial focal length using Zernike polynomials over different apertures", doi: 10.1117/12.2251442.

Summary of Invention

The invention is defined by the independent claims. Dependent claims specify embodiments thereof.

Technical Problem

For example, a wavefront formed by a spectacle lens can be evaluated by numerically calculating the optical path lengths of a sufficient number of light beams, and also subsequently fitting the wavefront to Zernike polynomials. However, if this requires a large calculation load, long processing time, high-performance hardware resources, etc., are required, which is unfavorable for quick and easy spectacle lens evaluation.
An aim of the present invention is to provide a technique for optimizing spectacle lens evaluation while realizing quick and easy processing.

Solution to Problem

The present invention has been conceived to achieve the above-described aim.
A first aspect of the present invention is a lens evaluation method in which
an amount obtained by multiplying a vector amount obtained by Fourier transform of a wavefront of a spectacle lens by a preset predetermined vector amount is adopted as an evaluation index of the spectacle lens.
The predetermined vector amount is a Fourier transform of a pseudo-inverse matrix that is for obtaining, for a local evaluation region of the spectacle lens, expansion coefficients for predetermined terms of predetermined orthogonal polynomials.
The predetermined terms are predetermined terms of Zernike polynomials, or
a weighted sum of a plurality of predetermined terms of Zernike polynomials.
A sixth aspect of the present invention is the lens evaluation method according to the first aspect,
wherein, in regard to the expansion coefficients, 1 is applied as a weight to each rotationally symmetric component when expansion using Zernike polynomials is performed.
A seventh aspect of the present invention is a lens designing method including:

> a step for determining an amount obtained by multiplying a vector amount obtained by Fourier transform of a wavefront of a spectacle lens by a preset predetermined vector amount as an evaluation index of the spectacle lens; and
> a step for designing a spectacle lens using the evaluation index.

An eighth aspect of the present invention is a lens manufacturing method including:

a step for determining an amount obtained by multiplying a vector amount obtained by Fourier transform of a wavefront of a spectacle lens by a preset predetermined vector amount as an evaluation index of the spectacle lens; and

a step for determining whether or not an optical characteristic of the spectacle lens is appropriate using the evaluation index.

A ninth aspect of the present invention is a lens evaluation program for causing a computer to execute a step for adopting an amount obtained by multiplying a vector amount obtained by Fourier transform of a wavefront of a spectacle lens by a preset predetermined vector amount as an evaluation index of the spectacle lens.

Advantageous Effects of Invention

According to the present invention, spectacle lens evaluation can be optimized while realizing quick and easy processing.

Brief Description of Drawings

FIG. 1 is an explanatory diagram illustrating one specific example of visual perceptions of Landolt rings as perceived by spectacle wearers, where (a) is a diagram illustrating an example of visual perception with the smallest PSF variance, (b) is an example of visual perception with the smallest wavefront aberration, and (c) is an example of visual perception with the highest contrast at a 30 CPD spatial frequency.

FIG. 2 is an explanatory diagram illustrating one specific example in which a shape is broken up using Zernike polynomials.

FIG. 3 is a flowchart illustrating an example of steps of a lens evaluation method according to one embodiment of the present invention.

Description of Embodiments

An embodiment of the present invention will be described below with reference to the drawings.

(1) Inventor's Findings

Findings made by the inventor will be described first, before describing the present embodiment in detail.

There are cases in which preferences relating to the visual perception of the outer world as perceived by a spectacle wearer are reflected in the optical characteristics of a spectacle lens to be used by the spectacle wearer. For example, there are spectacle wearers who prefer visual perception with priority placed on brightness (PSF and good low-frequency contrast), spectacle wearers who prefer visual perception with priority placed on resolution (good high-frequency contrast), etc., and it is thus desirable to be able to provide spectacle lenses having optical characteristics matching the preferences of spectacle wearers.

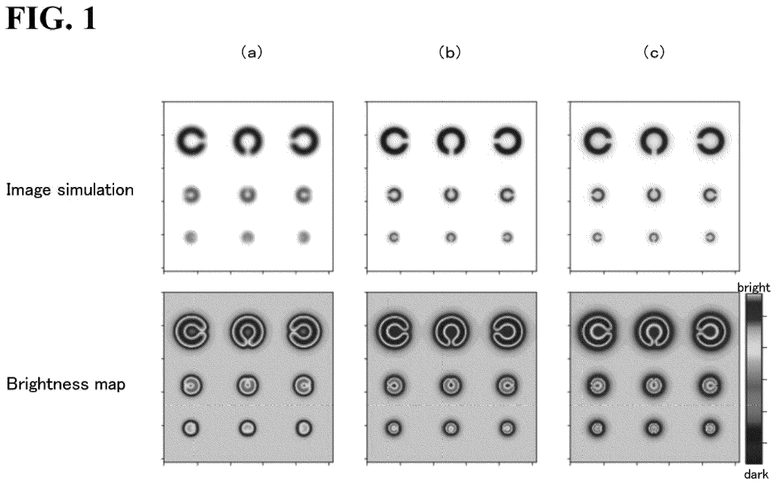

Specifically, there are spectacle wearers who prefer the visual perception at a focus position with the smallest point spread function (PSF) variance, as illustrated in FIG. 1(a), spectacle wearers who prefer the visual perception at a focus position with the smallest wavefront aberration, as illustrated in FIG. 1(b), spectacle wearers who prefer the visual perception at a focus position with the highest contrast at a 30 CPD spatial frequency, as illustrated in FIG. 1(c), etc., for example. It can be determined whether the visual perception through a spectacle lens would be that in FIG. 1(a), 1(b), or 1(c) by estimating the focus position (image forming position) of the spectacle lens.

It is known that the focus position (image forming position) of a spectacle lens is dependent not only on power but also on the amount of aberration (especially spherical aberration) and object spatial frequency. Accordingly, in order to correctly estimate the focus position of a spectacle lens, aberration amount, object spatial frequency, etc., need to be taken into consideration.

Thus, it is conceivable to use Zernike polynomials and the wavefront of a spectacle lens in the evaluation of visual perception through a spectacle lens (in other words, the optical characteristics of the spectacle lens), as mentioned above, so as to be able to obtain results in which not only power but also aberration amount, object spatial frequency, etc., are taken into consideration.

The wavefront of a spectacle lens is the wavefront of a luminous flux passing through the spectacle lens and having a diameter defined by the pupil.

Zernike polynomials are functions (orthogonal polynomials) defined within unit circles having a radius of 1. Specifically, Zernike polynomials are represented by formula (1) below.

[Math. 1]

$$W(x, y) \quad = \sum_{j=1}^{J} c_j \, Z_j(x, y) \quad \cdots_{(1)}$$

In formula (1), W(x, y) is the wavefront at coordinates x, y, $Z_j(x, y)$ is the jth Zernike polynomial, $c_j$ is the Zernike coefficient corresponding to the jth Zernike polynomial, and J is the number of Zernike polynomials used for expansion.

According to such Zernike polynomials, all surface shapes can be (approximately) expressed by adding Zernike polynomials together.

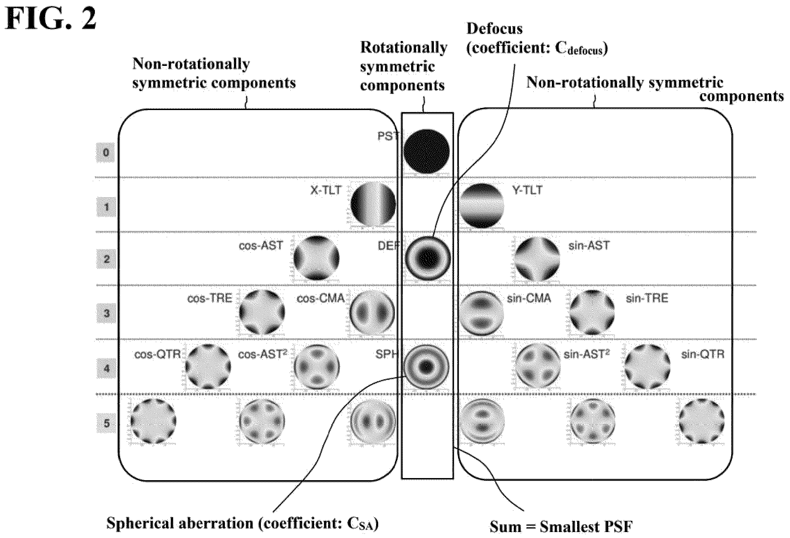

Specifically, for example, a given surface shape can be broken up into the 0th-order to nth-order (where n is a natural number) aberrations using Zernike polynomials, as illustrated in FIG. 2.

Note that, in the drawing, the components enclosed by the box near the center indicate rotationally symmetric components, and the rest of the components indicate non-rotationally symmetric components. Furthermore, in the drawing, the 2nd-order aberration component belonging to the rotationally symmetric components is commonly referred to as a power error (defocus), and the coefficient of this aberration corresponds to the focus position with the smallest wavefront aberration. The 4th-order aberration component belonging to the rotationally symmetric components is a component corresponding to spherical aberration. The sum of the coefficients of the components belonging to the rotationally symmetric components corresponds to the focus position with the smallest PSF.

By using Zernike polynomials and the wavefront of a spectacle lens as described above, the evaluation of visual perception through a spectacle lens can be optimized. However, if this requires a large calculation load, long processing time, high-performance hardware resources, etc., are required, which is unfavorable for quick and easy spectacle lens evaluation. In particular, if the spectacle lens is a progressive multifocal lens, the increase in load becomes highly prominent because calculation needs to be performed separately for each measurement point over the entire effective diameter.

Having conducted diligent investigation based on the circumstances described above, the present inventor conceived of a technique for optimizing spectacle lens evaluation (especially the evaluation of defocus, spherical aberration, PSF, etc., that significantly affect visual perception through spectacle lenses) while realizing quick and easy processing using high-speed computation. Such a technique will be described in detail below in the present embodiment.

(2) Overview of High-Speed Computation

As mentioned above, Zernike polynomials are represented by formula (1). In order to determine wavefront aberration for each coordinate point of an evaluation-target spectacle lens based on formula (1), the Zernike coefficients $c_j$ (the magnitudes thereof) need to be known.

In order to determine the Zernike coefficients $c_j$, it is conceivable to adopt the following method: the Zernike coefficients $c_j$ are treated as unknown coefficients; each Zernike polynomial $Z_j(x, y)$ (i.e., function f) is multiplied by an unknown coefficient, and the Zernike polynomials $Z_j(x, y)$ are added up; and an operation (the least squares method, etc.) for fitting the results to a measured shape is performed to calculate the Zernike coefficients $c_j$. A pseudo-inverse matrix is used for the formulation of this method. Pseudo-inverse matrices are matrices similar to inverse matrices that are obtained by performing mathematical operations on matrices that cannot have inverse matrices. Pseudo-inverse matrices are also called generalized inverses, and inverse matrices extended to non-square and singular matrices correspond thereto, for example.

Here, in order to describe the pseudo-inverse matrix in more detail, the relationship between a local wavefront and Zernike coefficients will be investigated. For example, if the relationship represented by W = cZ holds true between a local wavefront W, Zernike polynomials Z, and Zernike coefficients c, the relationship $c = (Z^TZ)^{-1}Z^TW$ can be obtained by mathematically processing W = cZ, and one set of Zernike coefficients c can be calculated therefrom. The "T" on the right shoulder indicates matrix transposition. Furthermore, the "-1" indicates an inverse matrix. In the relationship $c = (Z^TZ)^{-1}Z^TW$, the portion "$(Z^TZ)^{-1}Z^T$" corresponds to the pseudo-inverse matrix. Such a pseudo-inverse matrix may also be simply indicated below by "M".

Specifically, the relationship between Zernike coefficients and a local wavefront, or in other words the Zernike expansion, is given by formula (2) below.

[Math. 2]

$$C(x,y) = (Z^T Z)^{-1} Z^T W(x,y) \quad \cdots (2)$$

In formula (2), C is a vector amount obtained by arranging Zernike coefficients corresponding to the number of components, W(x, y) is obtained by extracting, as vectors, data corresponding to a number of local data items centering on x, y from W indicating the entirety of the wavefront data, and Z is a matrix representing the Zernike polynomials corresponding to the respective points and components that has a size of (the number of local data items × the number of components).

Suppose a case in which the calculation using formula (2) above is performed for every point of a spectacle lens.

**In** this case, when the pseudo-inverse matrix is defined as $(Z^T Z)^{-1} Z^T = M$, formula (2) can be rewritten as formula (3) below by calculating the matrix M having a size of (the number of local data items × the number of components) in advance and reusing the matrix M.

[Math. 3]

$$C(x,y) = MW(x,y) \quad \cdots (3)$$

According to formula (3), the calculation amount per point can be reduced by reusing the matrix M. However, a calculation amount corresponding to (the number of local data items × the number of components) is still required. Thus, if calculation is performed for every point of a spectacle lens, a calculation amount corresponding to (the number of data items of all points × the number of local data items × the number of components) will be required. Here, the number of data items of all points is the square of the number k of data items in one direction because the data is two dimensional. Furthermore, the number of local data items is proportional to the number of data items of all points because a local region is defined as an area corresponding to x% of the entire area. When such matters are taken into consideration, the calculation amount per component is proportional to the fourth power of the number k of data items in one direction.

In regard to this, in the present embodiment, the calculation amount is reduced using a method as described below.

The Zernike expansion at all points of a spectacle lens can be regarded as a convolution as shown in formula (4) below.

[Math. 4]

$$C = M * W \quad \cdots (4)$$

In a Fourier space, a convolution can be represented as a product of functions. This feature is also used in the present embodiment. That is, as shown in formula (5) below, C can therefore be obtained be performing inverse-Fourier transform on the product of the Fourier transform of M and the Fourier transform of W.

[Math. 5]

$$C = \mathcal{F}^{-1}[\mathcal{F}(M) \cdot \mathcal{F}(W)] \quad \cdots (5)$$

In formula (5), "$F^{-1}[\ ]$" indicates the inverse-Fourier transform of the function enclosed by the square brackets. F [W] is the Fourier transform of the wavefront W. F[M] is the Fourier transform of the matrix M, and corresponds to an example of the preset predetermined vector amount. The predetermined vector amount here indicates a vector amount obtained by Fourier transform of a pseudo-inverse matrix for obtaining expansion coefficients for predetermined terms of polynomials, and when expressed mathematically, corresponds to F[M], which is the Fourier transform of the matrix M, for example.

It is known that the calculation amount in Fourier transform is O(NlogN) according to the Bachmann-Landau O notation. Accordingly, the calculation amount in high-speed Zernike expansion in which Fourier transform is used, such as that in formula (5), is proportional to $n^2 \log n$, and a significant reduction in the calculation amount can be realized in comparison with, for example, a case in which Zernike expansion is performed using the least squares method or the like.

That is, in the present embodiment, upon evaluating a spectacle lens, an amount obtained by multiplying the Fourier transform F[W] of the wavefront W of the spectacle lens by the Fourier transform F[M] of the matrix M, which is a preset predetermined vector amount, is determined, and the evaluation is performed using the determined amount. Accordingly, the present embodiment is highly favorable for performing evaluation quickly and easily because a significant reduction in the calculation amount can be realized, and an increase in the calculation load for the evaluation can thus be suppressed.

(3) Spectacle Lens Evaluation Procedure

Next, an example of steps for evaluating a spectacle lens using the high-speed computation according to the above-described method, or that is, steps in the lens evaluation method according to the present embodiment, will be described.

The steps of the lens evaluation method described below are executed using a computer device. That is, lens evaluation according to the steps described below is performed while using a computer device comprising hardware resources such as a computation unit including a central processing unit (CPU) or the like, a memory such as a flash memory or a hard disk drive (HDD), and an input/output interface, and by causing the computation unit to execute a predetermined program that is pre-installed in the memory.

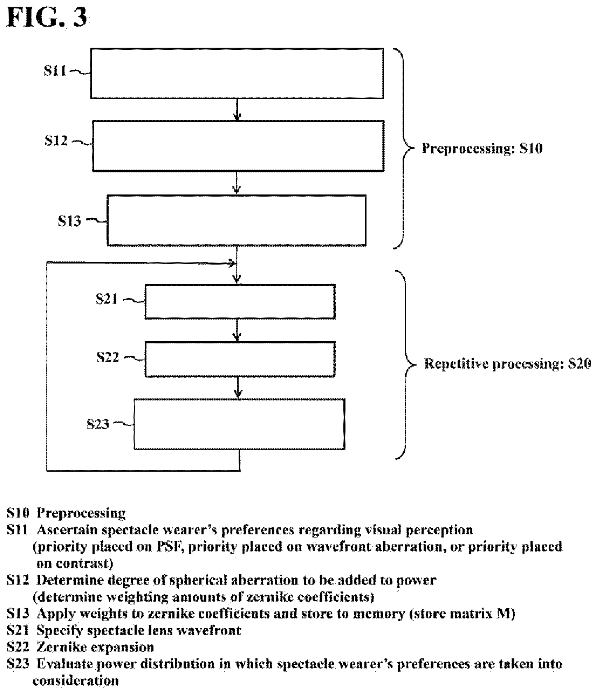

FIG. 3 is a flowchart illustrating an example of the steps of the lens evaluation method according to the present embodiment.

As shown in the illustrated example, the steps of the lens evaluation method according to the present embodiment are divided into preprocessing (step 10; "step" is hereinafter abbreviated as "S"), and repetitive processing (S20).

In the preprocessing (S10), first, for a spectacle wearer who is to wear the evaluation-target spectacle lens, the spectacle wearer's preferences regarding visual perception are ascertained (S11). Specifically, for example, it is ascertained, inter alia, whether the spectacle wearer: prefers the visual perception at a focus position where the variance of PSF is the smallest; prefers the visual perception at a focus position where wavefront aberration is the smallest; or prefers the visual perception at a focus position where the contrast for the 30 CPD spatial frequency is the highest. For example, the spectacle wearer's preferences regarding visual perception can be ascertained by outputting images such as those illustrated in FIG. 1 on a display screen connected to the input/output interface of the computer device for the spectacle wearer to see, and having the spectacle wearer input, via the input/output interface, information as to what kind of visual perception the spectacle wearer prefers.

Upon ascertaining the spectacle wearer's preferences regarding visual perception, the degree of spherical power to be added to the power of the spectacle lens is determined for the spectacle lens that the spectacle wearer is to wear (S12). Specifically, weighting amounts to be applied to the Zernike coefficients $c_j$ of the respective terms in the weighted sum evaluation of Zernike polynomials relating to the surface shape of the spectacle lens wavefront are determined based on the ascertained results of the spectacle wearer's preferences regarding visual perception. By determining the weighting amounts to be applied to the Zernike coefficients $c_j$, the spectacle wearer's preferences regarding visual perception are reflected in the surface shape specified by the Zernike polynomials.

Then, once the weighting amounts to be applied to the Zernike coefficients $c_j$ have been determined, the results of the determination are stored in the memory for later use (S13). Specifically, the matrix M obtained by determining the weighting amounts to be applied to the Zernike coefficients $c_j$ is calculated in advance and stored in a predetermined storage area in the memory. Thus, the matrix M having a size of (the number of local data items $\times$ the number of components) can be read from the memory and reused.

Note that multiple types of the matrix M having different weighting amounts may be stored in the memory.

The repetitive processing (S20) is performed after the aforementioned preprocessing (S10) is complete. In the repetitive processing (S20), first, the wavefront of the evaluation-target spectacle lens is specified (S21). The method to be adopted for wavefront specification is not particularly limited, and wavefront specification can be performed through simulation processing in which a wave-optical calculation is used, for example.

Following the specification of the wavefront of the evaluation-target spectacle lens, Zernike expansion is performed with respect to the specified wavefront of the spectacle lens (S22).

Specifically, first, the matrix M for solving local Zernike expansions is read from the memory. The matrix M corresponds to a pseudo-inverse matrix for integrating the number of terms of Zernike polynomials into one. Thus, reading and reusing the matrix M here makes it unnecessary to consider each Zernike polynomial term.

Once the matrix M has been read, Fourier transform is performed on the specified wavefront of the spectacle lens, and Fourier transform is performed on the read matrix M. Furthermore, in a Fourier space, the Fourier transform of the wavefront and the Fourier transform of the matrix M are multiplied, and inverse-Fourier transform is performed on the product, as shown in formula (5). Thus, a result equivalent to a result that would be obtained by convolution (see formula (4)) of the wavefront W and the matrix M, i.e., Zernike expansion results at all points of the evaluation-target spectacle lens, can be obtained. Here, because calculation processing in which a Fourier space is used is performed instead of actually performing convolution, calculation equivalent to loops of convolution can be completed through a single iteration of the calculation processing, and a significant reduction in the calculation amount can be realized compared to a case in which convolution is performed.

Subsequently, based on the Zernike expansion results, a power distribution of the evaluation-target spectacle lens in which the spectacle wearer's preferences are taken into consideration is evaluated (S23). Here, the Zernike expansion result for the spectacle lens wavefront is used as an evaluation index. That is, an amount obtained by multiplying the Fourier transform of the spectacle lens wavefront (i.e., a vector amount obtained by Fourier transform of a wavefront of a spectacle lens) by the Fourier transform of the matrix M, which is an example of the preset predetermined vector amount, or more specifically, an amount obtained by performing inverse-Fourier transform on the product, is used as an evaluation index.

Specifically, with respect to the evaluation-target spectacle lens, a determination is made as to whether or not the power distribution of the evaluation-target spectacle lens, which is one optical characteristic of the evaluation-target spectacle lens, is appropriate using the result obtained by the Zernike expansion as an evaluation index. It suffices to make the determination as to whether or not the power distribution is appropriate according to whether or not the power distribution matches a preset determination criterion. For example, the power distribution is determined as being appropriate if the power distribution matches the determination criterion, and the power distribution is determined as being inappropriate if the power distribution does not match the determination criterion. Because the result obtained by the Zernike expansion is used as an evaluation index with respect to the power distribution subjected to determination here, not only power but also aberration amount, object spatial frequency, etc., are taken into consideration in the focus position (image forming position) of the spectacle lens. Accordingly, the spectacle wearer's preferences regarding visual perception are reflected in the determination result, and the evaluation of the spectacle lens can thus be optimized.

Note that, if lens evaluation is to be newly performed for a spectacle lens having a different surface shape, it suffices to perform the above-described repetitive processing (S20) again.

In the present embodiment, lens evaluation of a spectacle lens is performed through the above-described steps. That is, it can be said that the lens evaluation method according to the present embodiment is a "lens evaluation method in which an amount obtained by multiplying a vector amount obtained by Fourier transform of a wavefront of a spectacle lens by a preset predetermined vector amount is adopted as an evaluation index of the spectacle lens".

Furthermore, as already mentioned above, the steps of the lens evaluation method according to the present embodiment are executed using a computer device. In this case, the predetermined program for causing the computer device to execute the steps of the lens evaluation method may be provided in a state in which the program is stored in a recording medium (for example, a magnetic disk, an optical disk, a magneto-optical disk, a semiconductor memory, or the like) that can be read by the computer device, or may be provided from the outside via a network such as the Internet or a dedicated line, as long as the program can be installed to the computer device. It can be said that the predetermined program installed to the computer device in such a manner is a "lens evaluation program that causes a computer to execute a step for adopting an amount obtained by multiplying a vector amount obtained by Fourier transform of a wavefront of a spectacle lens by a preset predetermined vector amount as an evaluation index of the spectacle lens".

(4) Spectacle Lens Designing Method, Etc.

The lens evaluation method involving the above-described steps can be applied to a spectacle lens designing method. In other words, a spectacle lens may be designed using the evaluation index determined through the above-described steps. This allows a spectacle lens in which the spectacle wearer's preferences regarding visual perception are reflected to be designed. That is, in the present embodiment, a spectacle lens may be designed using a "lens designing method including: a step for determining an amount obtained by multiplying a vector amount obtained by Fourier transform of a wavefront of a spectacle lens by a preset predetermined vector amount as an evaluation index of the spectacle lens; and a step for designing a spectacle lens using the evaluation index".

According to such a lens designing method, processing such as that described below can be realized. For example, assume Zernike coefficient and the matrix for the spherical aberration term of Zernike polynomials are $C_{SA}$ and $M_{SA}$, respectively, and assume Zernike coefficient and the matrix for the defocus term of Zernike polynomials are $C_{defocus}$ and $M_{defocus}$, respectively (see fig. 2). In this case, theoretically speaking, the two formulae $W \times M_{SA} = C_{SA}$ and $W \times M_{defocus} = C_{defocus}$ hold true for the spherical aberration term and the defocus term, respectively. In contrast to this, according to the above-described lens designing method, the two formulae can be integrated into the single formula $W \times (M_{SA} + M_{defocus}) = C_{SA} + C_{defocus}$ because calculation processing in which a Fourier space is used is performed. This means that it suffices to use one formula even if weighting amounts of Zernike coefficients are to be adjusted as appropriate. For example, if 0.5 and 1 are to be applied as weighting amounts to the Zernike coefficients $C_{SA}$ and $C_{defocus}$, respectively, it suffices to use the single formula $W \times (0.5 \times M_{SA} + 1 \times M_{defocus}) = 0.5 \times C_{SA} + 1 \times C_{defocus}$. Accordingly, high versatility, flexibility, etc., can be ensured in regard to calculation processing that is necessary in lens design, thus making the calculation processing highly convenient for lens designers.

Furthermore, the lens evaluation method involving the above-described steps can be applied to a spectacle lens production method. In other words, in the production of a spectacle lens, determination as to whether or not an optical characteristic of the spectacle lens is appropriate may be performed using the evaluation index determined through the above-described steps. This enables production of a spectacle lens in which the spectacle wearer's preferences regarding visual perception are reflected. That is, in the present embodiment, a spectacle lens may be produced using a "spectacle lens production method including: a step for determining an amount obtained by multiplying a vector amount obtained by Fourier transform of a wavefront of a spectacle lens by a preset predetermined vector amount as an evaluation index of the spectacle lens; and a step for judging whether an optical characteristic of the spectacle lens is appropriate or not using the evaluation index".

(5) Effects of Present Embodiment

According to the present embodiment, one or more of the effects described below can be obtained.
In the present embodiment, an amount obtained by multiplying a vector amount obtained by Fourier transform of a wavefront of a spectacle lens by a preset predetermined vector amount is adopted as an evaluation index of the spectacle lens. Furthermore, a result obtained by Zernike expansion is used as the evaluation index. Thus, in the evaluation using the evaluation index, not only power but also aberration amount, object spatial frequency, etc., are taken into consideration for the focus position (image forming position) of the spectacle lens. Accordingly, the spectacle wearer's preferences regarding visual perception are reflected in the evaluation of a spectacle lens in the present embodiment, and the evaluation of the spectacle lens can thus be optimized.
Moreover, in the present embodiment, an amount obtained by multiplying a vector amount obtained by Fourier transform of a wavefront of a spectacle lens by a preset predetermined vector amount is determined when Zernike expansion is performed. Furthermore, a Fourier transform of a pseudo-inverse matrix is used as the predetermined vector amount. That is, calculation processing in which a Fourier space is used is performed instead of actually performing convolution. Accordingly, a significant reduction in the calculation amount can be realized, and an increase in the calculation load for the evaluation can thus be suppressed. If a large calculation load is not required, neither are a long processing time, high-performance hardware resources, etc., which is highly favorable for quick and easy spectacle lens evaluation.
As described above, according to the present embodiment, spectacle lens evaluation can be optimized while realizing quick and easy processing.

(6) Modifications, Etc.

An embodiment of the present invention has been described above. However, the content disclosed above indicates an example embodiment of the present invention. That is, the present invention is not limited to the example embodiment described above, and various modifications can be made .
In the above-described embodiment, the Fourier transform of the matrix M is described as an example of a predetermined vector amount by which a vector amount obtained by Fourier transform of a wavefront of a spectacle lens is multiplied. However, the predetermined vector amount may be a vector amount as described below. For example, the predetermined vector amount may be a Fourier transform of a pseudo-inverse matrix that is for obtaining, for a local evaluation region of a spectacle lens, expansion coefficients for predetermined terms of predetermined polynomials. Furthermore, for example, the vector amount may be a Fourier transform of a pseudo-inverse matrix that is for obtaining, for a local evaluation region of a spectacle lens, expansion coefficients for predetermined terms of predetermined orthogonal functions. For example, polynomials that are orthogonal in a weighted circular region in which the Stiles-Crawford effect is taken into consideration may be used.
Furthermore, for example, the predetermined terms of the above-described polynomials or orthogonal polynomials may be predetermined terms of Zernike polynomials, or may be a weighted sum of a plurality of predetermined terms of Zernike polynomials.
Furthermore, for example, in regard to the expansion coefficients in the above-described polynomials or orthogonal polynomials, 1 may be applied as a weight to each rotationally symmetric component (see FIG. 2) when expansion using Zernike polynomials is performed. By applying 1 as the weight for each rotationally symmetric component, the defocus position with the smallest PSF can be calculated. However, weights for components that do not have significant amounts may be omitted.
Furthermore, for example, the expansion coefficients in the above-described polynomials or orthogonal polynomials may be applied to the evaluation of astigmatic power. By applying 1 as the weight for each 2nd-order symmetric component, the deviation of the defocus position can be calculated using a cross-section based on the position with the smallest PSF. However, weights for components that do not have significant amounts may be omitted.

**Claims**

1. A computer implemented lens evaluation method **characterised in that**

an amount obtained by multiplying a vector amount obtained by Fourier transform of a wavefront of a spectacle lens by a preset predetermined vector amount is adopted as an evaluation index of the spectacle lens, wherein the predetermined vector amount is a Fourier transform of a pseudo-inverse matrix that is for obtaining, for a local evaluation region of the spectacle lens, expansion coefficients for predetermined terms of predetermined orthogonal polynomials, and the predetermined terms are predetermined terms of Zernike polynomials or a weighted sum of a plurality of predetermined terms of Zernike polynomials.

2. The lens evaluation method according to claim 1, wherein, in regard to the expansion coefficients, 1 is applied as a weight to each rotationally symmetric component when expansion using Zernike polynomials is performed.

3. A computer implemented lens designing method **characterised by** comprising:

a step for determining an amount obtained by multiplying a vector amount obtained by Fourier transform of a wavefront of a spectacle lens by a preset predetermined vector amount as an evaluation index of the spectacle lens; and
a step for designing a spectacle lens using the evaluation index,
wherein the predetermined vector amount is a Fourier transform of a pseudo-inverse matrix that is for obtaining, for a local evaluation region of the spectacle lens, expansion coefficients for predetermined terms of predetermined orthogonal polynomials,
and the predetermined terms are predetermined terms of Zernike polynomials or a weighted sum of a plurality of predetermined terms of Zernike polynomials.

4. A computer implemented lens manufacturing method **characterised by** comprising:

a step for determining an amount obtained by multiplying a vector amount obtained by Fourier transform of a wavefront of a spectacle lens by a preset predetermined vector amount as an evaluation index of the spectacle lens; and
a step for determining whether or not an optical characteristic of the spectacle lens is appropriate using the evaluation index,
wherein the predetermined vector amount is a Fourier transform of a pseudo-inverse matrix that is for obtaining, for a local evaluation region of the spectacle lens, expansion coefficients for predetermined terms of predetermined orthogonal polynomials,
and the predetermined terms are predetermined terms of Zernike polynomials or a weighted sum of a plurality of predetermined terms of Zernike polynomials.

5. A lens evaluation program **characterised in that** it causes a computer to execute

a step for adopting an amount obtained by multiplying a vector amount obtained by Fourier transform of a wavefront of a spectacle lens by a preset predetermined vector amount as an evaluation index of the spectacle lens,
wherein the predetermined vector amount is a Fourier transform of a pseudo-inverse matrix that is for obtaining, for a local evaluation region of the spectacle lens, expansion coefficients for predetermined terms of predetermined orthogonal polynomials,
and the predetermined terms are predetermined terms of Zernike polynomials or a weighted sum of a plurality of predetermined terms of Zernike polynomials.

**Patentansprüche**

1. Computerimplementiertes Glasbewertungsverfahren, **dadurch gekennzeichnet, dass** ein Betrag, erhalten durch Multiplizieren eines Vektorbetrags, der durch eine Fouriertransformation einer Wellenfront eines Brillenglases erhalten wird, mit einem voreingestellten vorbestimmten Vektorbetrag als ein Bewertungsindex des Brillenglases angenommen wird,

wobei der vorbestimmte Vektorbetrag eine Fouriertransformation einer pseudoinversen Matrix ist, die dazu dient, für eine lokale Bewertungsregion des Brillenglases Expansionskoeffizienten für vorbestimmte Terme von vorbestimmten orthogonalen Polynomen zu erhalten,

und die vorbestimmten Terme vorbestimmte Terme von Zernike-Polynomen oder eine gewichtete Summe einer Mehrzahl von vorbestimmten Termen von Zernike-Polynomen sind.

2. Glasbewertungsverfahren nach Anspruch 1, wobei hinsichtlich der Expansionskoeffizienten 1 als eine Gewichtung auf jede rotationssymmetrische Komponente angewandt wird, wenn eine Expansion unter Verwendung von Zernike-Polynomen durchgeführt wird.

3. Computerimplementiertes Glasentwurfsverfahren, **dadurch gekennzeichnet, dass** es umfasst:

einen Schritt zur Bestimmung eines Betrags, erhalten durch Multiplizieren eines Vektorbetrags, der durch eine Fouriertransformation einer Wellenfront eines Brillenglases erhalten wird, mit einem voreingestellten vorbestimmten Vektorbetrag als ein Bewertungsindex des Brillenglases; und
einen Schritt zum Entwerfen eines Brillenglases unter Verwendung des Bewertungsindex,
wobei der vorbestimmte Vektorbetrag eine Fouriertransformation einer pseudoinversen Matrix ist, die dazu dient, für eine lokale Bewertungsregion des Brillenglases Expansionskoeffizienten für vorbestimmte Terme von vorbestimmten orthogonalen Polynomen zu erhalten,
und die vorbestimmten Terme vorbestimmte Terme von Zernike-Polynomen oder eine gewichtete Summe einer Mehrzahl von vorbestimmten Termen von Zernike-Polynomen sind.

4. Computerimplementiertes Glasherstellungsverfahren, **dadurch gekennzeichnet, dass** es umfasst:

einen Schritt zur Bestimmung eines Betrags, erhalten durch Multiplizieren eines Vektorbetrags, der durch eine Fouriertransformation einer Wellenfront eines Brillenglases erhalten wird, mit einem voreingestellten vorbestimmten Vektorbetrag als ein Bewertungsindex des Brillenglases; und
einen Schritt zur Bestimmung, ob oder ob nicht eine optische Eigenschaft des Brillenglases geeignet ist, unter Verwendung des Bewertungsindex,
wobei der vorbestimmte Vektorbetrag eine Fouriertransformation einer pseudoinversen Matrix ist, die dazu dient, für eine lokale Bewertungsregion des Brillenglases Expansionskoeffizienten für vorbestimmte Terme von vorbestimmten orthogonalen Polynomen zu erhalten,
und die vorbestimmten Terme vorbestimmte Terme von Zernike-Polynomen oder eine gewichtete Summe einer Mehrzahl von vorbestimmten Termen von Zernike-Polynomen sind.

5. Glasbewertungsprogramm, **dadurch gekennzeichnet, dass** es einen Computer veranlasst, Folgendes auszuführen:

einen Schritt zum Annehmen eines Betrags, erhalten durch Multiplizieren eines Vektorbetrags, der durch eine Fouriertransformation einer Wellenfront eines Brillenglases erhalten wird, mit einem voreingestellten vorbestimmten Vektorbetrag als ein Bewertungsindex des Brillenglases,
wobei der vorbestimmte Vektorbetrag eine Fouriertransformation einer pseudoinversen Matrix ist, die dazu dient, für eine lokale Bewertungsregion des Brillenglases Expansionskoeffizienten für vorbestimmte Terme von vorbestimmten orthogonalen Polynomen zu erhalten,
und die vorbestimmten Terme vorbestimmte Terme von Zernike-Polynomen oder eine gewichtete Summe einer Mehrzahl von vorbestimmten Termen von Zernike-Polynomen sind.

## Revendications

1. Procédé d'évaluation de lentille mis en œuvre par ordinateur, **caractérisé en ce que**

une quantité obtenue en multipliant une quantité vectorielle obtenue en appliquant une transformation de Fourier à un front d'onde d'un verre de lunettes par une quantité vectorielle prédéterminée prédéfinie est adoptée en tant qu'indice d'évaluation du verre de lunettes,
dans lequel la quantité vectorielle prédéterminée est une transformée de Fourier d'une matrice pseudo-inverse qui est destinée à obtenir, pour une région d'évaluation locale du verre de lunettes, des coefficients d'expansion pour des termes prédéterminés de polynômes orthogonaux prédéterminés,
dans lequel les termes prédéterminés sont des termes prédéterminés de polynômes de Zernike ou une somme pondérée d'une pluralité de termes prédéterminés de polynômes de Zernike.

2. Procédé d'évaluation de lentille selon la revendication 1,
dans lequel, pour les coefficients d'expansion, 1 est appliqué en tant que poids à chaque composant symétrique en rotation lorsqu'une expansion à l'aide de polynômes de Zernike est effectuée.

3. Procédé de conception de lentille mis en œuvre par ordinateur, **caractérisé en ce qu'**il comprend :

une étape de détermination d'une quantité obtenue en multipliant une quantité vectorielle obtenue en appliquant une transformation de Fourier à un front d'onde d'un verre de lunettes par une quantité vectorielle prédéterminée prédéfinie en tant qu'indice d'évaluation du verre de lunettes ; et
une étape de conception d'un verre de lunettes à l'aide de l'indice d'évaluation,
dans lequel la quantité vectorielle prédéterminée est une transformée de Fourier d'une matrice pseudo-inverse qui est destinée à obtenir, pour une région d'évaluation locale du verre de lunettes, des coefficients d'expansion pour des termes prédéterminés de polynômes orthogonaux prédéterminés,
dans lequel les termes prédéterminés sont des termes prédéterminés de polynômes de Zernike ou une somme pondérée d'une pluralité de termes prédéterminés de polynômes de Zernike.

4. Procédé de fabrication de lentille mis en œuvre par ordinateur, **caractérisé en ce qu'**il comprend :

une étape de détermination d'une quantité obtenue en multipliant une quantité vectorielle obtenue en appliquant une transformation de Fourier à un front d'onde d'un verre de lunettes par une quantité vectorielle prédéterminée prédéfinie en tant qu'indice d'évaluation du verre de lunettes ; et
une étape de détermination du fait qu'une caractéristique optique du verre de lunettes est appropriée ou non à l'aide de l'indice d'évaluation,
dans lequel la quantité vectorielle prédéterminée est une transformée de Fourier d'une matrice pseudo-inverse qui est destinée à obtenir, pour une région d'évaluation locale du verre de lunettes, des coefficients d'expansion pour des termes prédéterminés de polynômes orthogonaux prédéterminés,
dans lequel les termes prédéterminés sont des termes prédéterminés de polynômes de Zernike ou une somme pondérée d'une pluralité de termes prédéterminés de polynômes de Zernike.

5. Programme d'évaluation de lentille, **caractérisé en ce qu'**il amène un ordinateur à exécuter

une étape d'adoption d'une quantité obtenue en multipliant une quantité vectorielle obtenue en appliquant une transformation de Fourier à un front d'onde d'un verre de lunettes par une quantité vectorielle prédéterminée prédéfinie en tant qu'indice d'évaluation du verre de lunettes,
dans lequel la quantité vectorielle prédéterminée est une transformée de Fourier d'une matrice pseudo-inverse qui est destinée à obtenir, pour une région d'évaluation locale du verre de lunettes, des coefficients d'expansion pour des termes prédéterminés de polynômes orthogonaux prédéterminés,
dans lequel les termes prédéterminés sont des termes prédéterminés de polynômes de Zernike ou une somme pondérée d'une pluralité de termes prédéterminés de polynômes de Zernike.

EP 4 130 856 B1

**FIG. 1**

# FIG. 2

EP 4 130 856 B1

# FIG. 3

S10 Preprocessing
S11 Ascertain spectacle wearer's preferences regarding visual perception
(priority placed on PSF, priority placed on wavefront aberration, or priority placed
on contrast)
S12 Determine degree of spherical aberration to be added to power
(determine weighting amounts of zernike coefficients)
S13 Apply weights to zernike coefficients and store to memory (store matrix M)
S21 Specify spectacle lens wavefront
S22 Zernike expansion
S23 Evaluate power distribution in which spectacle wearer's preferences are taken into
consideration

**EP 4 130 856 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6209722 B
- US 2011153248 A1
- US 7019846 B2
- WO 2016002272 A1

**Non-patent literature cited in the description**

- **XIANG LI et al.** *Inspection of misalignment factors in lens assembly*
- **BINKELE et al.** *Determination of the paraxial focal length using Zernike polynomials over different apertures*